# EUROPEAN PATENT SPECIFICATION

(11) **EP 0 730 125 B1**
(45) Date of publication and mention of the grant of the patent: **29.08.2001**
(21) Application number: 95932219.9
(22) Date of filing: 21.09.1995
(51) Int. Cl.: F24F 5/00, F16L 13/08

(54) **PIPE CONNECTING METHOD AND PIPE STRUCTURE**
VERFAHREN ZUM VERBINDEN VON ROHREN UND ROHRSTRUKTUR
PROCEDE DE RACCORDEMENT DE TUYAUX ET STRUCTURE DE TUYAUX

(30) Priority: 22.09.1994 JP 22781094
(43) Date of publication of application: 04.09.1996
(73) Proprietor: DAIKIN INDUSTRIES, LTD., Kita-ku, Osaka 530 (JP)
(72) Inventor: NAKAO, Noriaki, Kanaoka Factory, Sakai-shi, Osaka 591 (JP); NISHINO, Haruhiko, O.K. Kizai Co., Ltd., Osaka-shi, Osaka 534 (JP)
(74) Representative: Bannerman, David Gardner
(86) International application number: JP9501924
(87) International publication number: WO9609498

(56) References cited:
- EP-A- 0 458 054
- DE-A- 1 475 799
- DE-A- 4 314 275
- FR-A- 1 238 443
- JP-A- 3 001 025
- JP-U- 55 006 747
- US-A- 3 202 442

## Description

### [Technical Field]

This invention relates to a piping structure and in particular relates to the structure of a joint portion between pipes.

### [Background Art]

As one of conventional refrigerating apparatus, there has been known a multi-type air conditioner as disclosed in Japanese Patent Application Laid-Open Gazette No.4-208370, in which a plurality of indoor units are connected to a single outdoor unit. In this air conditioner, a refrigerant circuit of the outdoor unit is connected to a refrigerant circuit of each of the indoor units through a communication line thereby forming a refrigerant piping system.

For the above-mentioned air conditioner, the outdoor unit and the indoor units are shipped from production facilities, are carried to the site of installation in a building or the like, are installed and are then connected to the communication line.

The communication line is formed in a way of brazing both pipes which each have a specific length and are each made of a copper pipe with each other. At the time, nitrogen is poured into the communication line to remove air out of the communication line so that air in the communication line is wholly substituted by nitrogen, and thereafter both the pipes are brazed.

### - Problems to be solved -

Each pipe of the air conditioner is formed, for example, in a uniform diameter from one opening end to another opening end and as mentioned above, the communication line is formed by brazing the pipes.

Meanwhile, in pipe connecting work, some general rules must be strictly observed. The general rules include "clean rule" and "dry rule". The dry rule is a rule that makes a pipe connecting work so as not to leave water in the pipe. The clean rule is a rule that makes a pipe connecting work so as to prevent the entry of alien substances into the pipe.

However, in conventional pipe connecting works, sufficient parts management is not necessarily made. For example, water drops due to dewfall or the like are often left on the inner surface of an original pipe for pipe connecting work. In other words, the pipe is often stored with both opening ends open.

Therefore, the pipe causing dewfall may be used as it is. Further, air in the pipe includes moisture. Accordingly, water may be left in the pipe contrary to the dry rule when refrigerant is charged into the pipe. This causes a problem of lack of reliability of air conditioning.

Furthermore, when the pipe is heated by a burner or the like in brazing, air in the pipe may produce an oxide film on the surface of the pipe made of a copper pipe.

Such a phenomenon is contrary to the clean rule. In detail, when refrigerant is charged into the pipe, the refrigerant peels off the oxide film. The peeled oxide film may blockade a narrow space such as a capillary tube or may pollute a lubricating oil for refrigerating apparatus thereby degrading lubricating performance. This may cause a problem leading to breakage of equipment.

US Patent No. 3,202,442 discloses a coupling comprising interconnectable first and second pipes, the first and second pipes having rupturable brass diaphragms sealing the ends of the said pipes. The first pipe further comprises diaphragm piercing means in the form of a tubular sleeve member with a point. The diaphragms are ruptured by the piercing means when the pipes are screwed together and the outside of the joint formed may be fixed in place by means of soldering or gluing.

German National Patent No. 1,475,799 discloses a coupling comprising pipes whose ends are closed by means of thin metal membranes, a plastics material or rubber. On forming a joint between the pipes, the membranes are pierced by piercing means (7). The pierced membranes remain in the joint formed and as such obstruct the flow of fluid through the pipes,

The present invention has been made in view of the foregoing problems and therefore has an object of enabling strict observation of both the clean rule and the dry rule in pipe connecting work thereby enhancing reliability of air conditioning.

### [Disclosure of Invention]

To attain the above object, a measure taken in the present invention is to blockade both opening ends of a pipe with metallic films respectively.

### - Specific features of the invention -

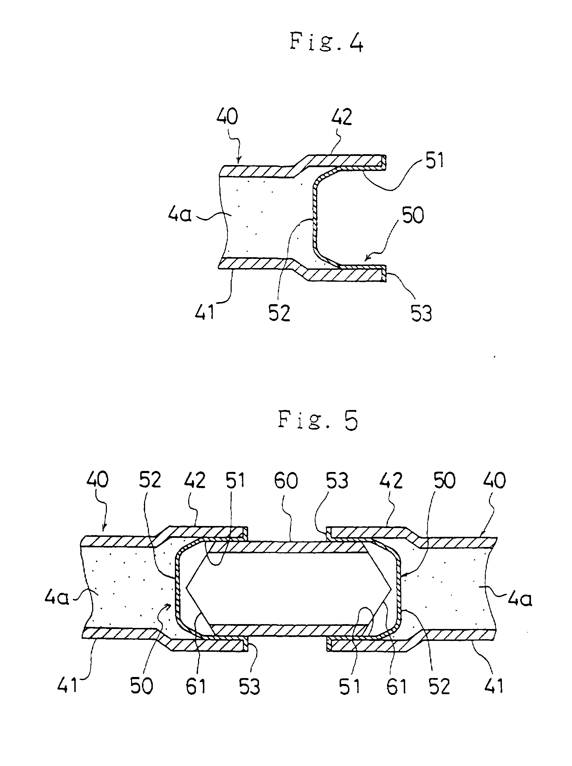

More specifically, as shown in Fig. 5, a technique of the invention comprises the method steps (i) to (iii) of claim 1.

A technique of the invention of claim 2 is so designed that according to the invention of claim 1, the block plug (50) is made of brazing filler metal and the block plug (50) serves as the jointing material for jointing the connecting portion (42) of the pipe (40) and the connecting piece (60).

A technique of the invention of claim 3 is so designed that according to the invention of claim 1, the block plug (50) is shaped into a hat in cross section.

A technique of the invention of claim 4 is so designed that according to the invention of claim 1, the block plug (50) is press-fitted into the connecting portion (42) so as to adhere closely to the opening end of the connecting portion (42).

A technique of the invention of claim 5 is so designed that according to the invention of claim 1, the block plug (50) is ultrasonically bonded with the opening end of the connecting portion (42).

A technique of the invention of claim 6 is so designed that according to the invention of claim 1, the pipe (40) is filled with inert gas (4a).

A technique of the invention of claim 7 is so designed that according to the invention of claim 1, both the connecting portions (42, 42) of the pipe (40) are formed larger in diameter than the main portion (41).

A technique of the invention of claim 8 is so designed that according to the invention of claim 1, the pipe (40) is a copper pipe.

A technique of the invention of claim 9 is so designed that according to the invention of claim 1, both ends (61, 61) of the connecting piece (60) are each shaped into a wedge point.

A technique of the invention of claim 10 is so designed that according to the invention of claim 1, a ring-shaped brazing filler metal (62) is fit on the connecting piece (60).

A technique of the invention of claim 11 is so designed that according to the invention of claim 1, the pipe (40) is a refrigerant pipe for refrigerating apparatus (10).

Furthermore the invention also comprises a piping structure as claimed in claim 12.

Further, the technique comprises block plugs (50) which are each made of a metallic film and are respectively mounted on opening ends of connecting portions (42, 42) continuously located on both end sides from a main portion (41) of the pipe (40) in a way that the outer peripheries of the block plugs (50) adhere closely to the opening ends of the connecting portions (42, 42) respectively so as to seal the pipe (40).

The block plug (50) is made of brazing filler metal.

Further, one end of a connecting piece (60) is inserted into the connecting portion (42) of one pipe (40) while breaking the block plug (50), the other end of the connecting piece (60) is inserted into the connecting portion (42) of another pipe (40) while breaking the block plug (50), and the connecting portions (42) of the pipes (40) are jointed with the connecting piece (60) by jointing material.

A technique of the invention of claim 13 is so designed that according to the invention of claim 12, the block plug (50) is made of brazing filler metal and the block plug (50) is the jointing material for jointing the connecting portion (42) of the pipe (40) and the connecting piece (60).

A technique of the invention of claim 14 is so designed that according to the invention of claim 12, both ends (61, 61) of the connecting piece (60) are each shaped into a wedge point.

A technique of the invention of claim 15 is so designed that according to the invention of claims 12 to 14, the pipe (40) is filled with inert gas (4a).

A technique of the invention of claim 16 is so designed that according to the invention of claim 12 to 15, the pipe (40) is a refrigerant pipe for refrigerating apparatus (10).

### - Operation -

Under the above structure, in the inventions of claims 1 and 12, the pipe connecting method starts with the blockading step of blockading the pipe (40). For example, a uniform-diameter original pipe, from which water and oil are removed, is formed and the connecting portions (42, 42) contiguous with the main portion (41) are then formed.

Particularly, in the inventions of claims 8, 12 and 20, the pipe (40) is a refrigerant pipe for refrigerating apparatus and is a copper pipe. In the invention of claim 7, the connecting portions (42, 42) are formed larger in diameter than the main portion (41).

Thereafter, in the inventions of claims 6 and 15, the inner space of the pipe (40) is filled with inert gas (4a).

Subsequently, in the state that the pipe (40) is filled with inert gas (4a), the block plugs (50) made in another step are respectively inserted into both the connecting portions (42, 42) from the opening ends thereof, and the block plugs (50) are mounted at the pipe (40) so as to seal the pipe (40), thereby completing the blockading step.

Particularly, in the inventions of claims 2,12 and 13 , the block plugs (50) are made of brazing filler metal. Further, in the inventions of claims 3 and 4, since the block plugs (50) are each shaped into a hat in cross section, the trunk portions of the block plugs are respectively press-fitted into the connecting portions (42, 42) from the opening ends thereof. In the invention of claim 5, the block plugs (50) are ultrasonically bonded with the connecting portions (42, 42).

Thereafter, for example, at the site of installation of the refrigerating apparatus (10), in the inventions of claims 1 and 12, the piece inserting step is started. In detail, when two pipes (40, 40) are connected to each other, one end of the connecting piece (60) is inserted into the connecting portion (42) of one of the pipes (40) and the other end of the connecting piece (60) is inserted into the connecting portion (42) of the other pipe (40).

Subsequently, the two pipes (40, 40) are moved toward each other and the connecting piece (60) is pushed into the connecting portions (42, 42) of both the pipes (40, 40). At the time, in the inventions of claims 9 and 14, since the end (61) of the connecting piece (60) is shaped into a point, the push of the connecting piece (60) provides breakage of the block plug (50) by the connecting piece (60).

In this state, the block plug (50) is interposed between the connecting piece (60) and the connecting portion (42) of the pipe (40).

Subsequently, the pipe connecting'method is shifted from the piece inserting step to the joint step. In the state that the connecting piece (60) is pushed into the connecting portions (42, 42) of both the pipes (40, 40), connection is made between each of the connecting portions (42, 42) and the connecting piece (50). For example, when the pipe (40) is heated, the block plug (50) is melt so that the pipe (40) and the connecting piece (60) are brazed with each other. At this time, if the inner space of the pipe (40) is filled with inert gas (4a), the inside of the pipe (40) is brazed in an atmosphere of inert gas thereby complering the joint step.

Particularly, in the invention of claim 10, since the ring-shaped brazing filler metal (62) is fitted on the connecting piece (60), shortage of brazing filler metal is prevented.

In the above-mentioned manner, connection of pipes (40) is sequentially made.

Further, at the blockading step, the pipe (40) is formed in a way of jointing the end piece (43) at the joint portion (44) of one end with the main portion (41) and mounting the block plug (50) at the bagged portion (45) of the end piece (43).

Thereafter, the pipe connecting method proceeds to the piece inserting step, where the connecting piece (60) is inserted into the end pieces (43) of the two pipes (40, 40) to be connected. When the connecting piece (60) is inserted into the end piece (43), more than a half of the outer peripheral edge of the block plug (50) is broken. When the connecting piece (60) is further pushed into the end piece (43), a part of the outer peripheral edge of the block plug (50) is left without being cut away so that the block plug (50) is left between the end piece (43) and the connecting piece (60).

Then, the pipe connecting method proceeds to the joint step, where the pipes (40) are connected in a way of jointing the connecting piece (60) with the connecting portion (44) of the end piece (43) by jointing member such as brazing filler metal.

### - Effects of the invention -

According to the inventions of claims 1, and 12 , since the block plugs (50) are respectively provided on both ends of the pipe (40) so that the inside of the pipe (40) is blockaded, sufficient management of pipes (40) is possible. Accordingly, it can be prevented in advance that: a high humidity of air enters the pipe (40); and the pipe (40) is used with dewfall left on the inner surface thereof.

As a result, according to the inventions of claims 11 and 16, since it can be securely prevented that water is mixed into refrigerant, the dry rule can be strictly observed thereby enhancing reliability of air conditioning.

In particular, the above-mentioned effect is conspicuously exerted in the case of use of a refrigerant mixture containing flon gas R134a (1,1,1,2-tetrafluoroethane), HFC (hydrofluoro carbon) or the like as refrigerant. In detail, if flon gas R134a is used as refrigerant, it is required to use ester oil as lubricating oil for refrigerating apparatus. Ester oil has a high affinity for water so as to be chemically combined with water at a very high speed. The mixture of ester oil and water would produce carboxylic acid. Carboxylic acid has an effect of melting an insulation (enamel) of a compressor. Therefore, the dry rule must be strictly observed. The above inventions can securely follow the dry rule.

Further, according to the invention of claim 6, since no water is produced in the pipe (40), production of an oxide film in brazing can be prevented. As a result, the clean rule can be strictly observed thereby enhancing reliability of refrigerating operation.

In detail, when the pipes (40) which are copper pipes are connected to each other by brazing, an oxide film is formed on each pipe due to chemical combination between copper and oxygen. If such an oxide film is formed on the inner surface of the pipe (40), the oxide film is mixed into refrigerant and lubricating oil for refrigerating apparatus. The oxide film degrades the lubricity of the lubricating oil for refrigerating apparatus, clogs a capillary tube and an oil backing hole of an accumulator and acceleratedly wears compressor parts and the like, resulting in decrease in life time of the compressor. Therefore, the clean rule must be strictly observed. The invention of claim 6 can securely follow the clean rule.

Furthermore, according to the inventions of claims 2,12 and 13, since the block plug (50) is made of brazing filler metal, it is not necessary to separately provide brazing filler metal for brazing. This enables saving in material thereby achieving energy conservation.

In addition, since the block plug (50) is used as brazing filler metal, it can be prevented that alien substances remain after connection of the pipes (40). This enhances reliability of refrigerating operation.

According to the invention of claim 3, since the block plug (50) is shaped into a hat in cross section, blockade of the pipe (40) can be securely made.

According to the invention of claim 4, since the block plug (50) is press-fitted into the pipe (40), mounting of the block plug (50) can be readily made. This facilitates a mounting work.

According to the invention of claim 5, since the block plug (50) is ultrasonically bonded with the pipe (40), the block plug (50) can be securely mounted on the pipe (40). This enhances sealing performance of the pipe (40).

According to the inventions of claims 6 and 15 since the pipe (40) is filled with inert gas (4a), production of an oxide film in brazing can be securely prevented. This enables secure obedience of the clean rule.

According to the invention of claim 7, since the connecting portion (42) of the pipe (40) is formed in a large diameter, the pipes (40, 40) can be connected with each other without decrease in pipe diameter due to the connecting piece (60).

According to the invention of claim 8, since the pipe (40) is a copper pipe, working such as bending can be readily made. This allows easy construction of piping.

According to the inventions of claims 9 and 14, since the ends (61, 61) of the connecting piece (60) are each shaped into a point, breakages of the block plugs (50) can be readily made at the ends (61, 61), this accelerates and facilitates the pipe connecting work.

According to the invention of claim 10, since the connecting piece (60) is provided with the ring-shaped brazing filler metal (62), shortage of brazing filler metal can be securely prevented so that the connecting piece (60) can be securely jointed with the pipe (40). This provides enhanced reliability of the pipe connecting work.

### [Brief Description of Drawings]

Fig. 1 is a diagram schematically showing a refrigerant piping system of an air conditioner.

Fig. 2 is a cross section showing a necessary portion of the pipe.

Fig. 3 is a cross section of one end of the pipe showing the state that the pipe is filled with nitrogen gas.

Fig. 4 is a cross section of one end of the pipe showing the state that a block plug is mounted thereon.

Fig. 5 is a cross section of ends of the pipes showing the state that a connecting piece is inserted thereinto.

Fig. 6 is a cross section of the ends of the pipes showing the state that the connecting piece is jointed therewith.

Fig. 7 is a cross section of the ends of the pipes showing the state that the ends are connected to each other.

Fig. 8 is an enlarged cross section showing the block plug.

Fig. 9 is a partially cutaway view in perspective of the connecting piece.

Fig. 10 is a partially cutaway view in perspective of the connecting piece on which a ring-shaped brazing filler metal is provided in Embodiment 2.

Fig. 11 is a cross section of one end of a pipe showing the state that a block plug is mounted thereon in Embodiment 3.

Fig. 13 is a cross section of the end of the pipe showing the state that a connecting piece is fitted thereto in Embodiment 3.

Fig. 14 is a cross section showing the connecting piece of Embodiment 3.

Fig. 15 is a cross section showing a connecting piece and one end of a pipe in Embodiment 4.

Fig. 16 is a cross section of the end of the pipe showing the state that the connecting piece is fitted thereto in Embodiment 4.

### [Best Mode for Carrying Out the Invention]

Detailed description is made below about embodiments of the present invention with reference to the drawings.

### - Embodiment 1 -

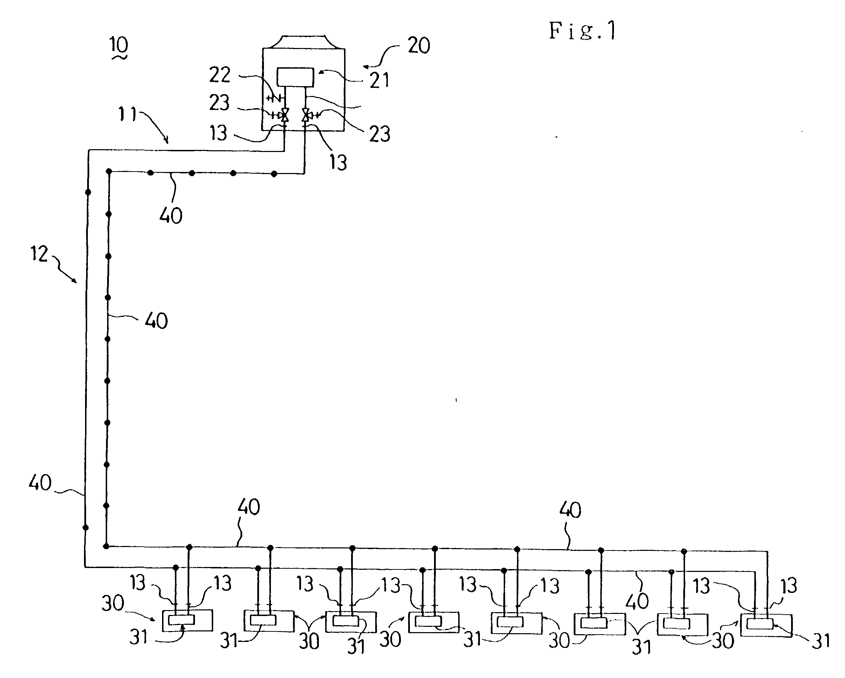

As shown in Fig. 1, reference numeral (10) indicates a multi-type air conditioner as an refrigerating apparatus in which a plurality of (a maximum of 8) indoor units (30) are connected to a single outdoor unit (20) through a communication line (11) as a refrigerant delivery line.

The outdoor unit (20), not shown in detail, is provided with an outdoor-side refrigerant circuit (21) so composed that an outdoor heat exchanger and an outdoor motor-operated expansion valve are connected with a compressor, a four-way selector valve and an outdoor fan through the refrigerant delivery line. On the refrigerant delivery line in the outdoor-side refrigerant circuit (21) of the outdoor unit (20), a service port (22) is provided. At both ends of the outdoor-side refrigerant circuit (21), shut-off valves (23, 23) are provided respectively.

The indoor unit (30), not shown in detail, is provided with an indoor-side refrigerant circuit (31) so composed that an indoor heat exchanger and an indoor-side motor-operated expansion valve are connected with an indoor fan through the refrigerant delivery line. The outdoor-side refrigerant circuit (21) and the indoor-side refrigerant circuit (21) are connected to each other through the communication line (11) thereby forming a refrigerant circulation system (12).

The above-mentioned air conditioner (10) circulates refrigerant in a way that in cooling operation, refrigerant discharged from the compressor is condensed by the outdoor heat exchanger, is reduced in pressure by the indoor motor-operated expansion valve, is evaporated by the indoor heat exchanger and is returned to the compressor, and in a way that in heating operation, refrigerant discharged from the compressor is condensed by the indoor heat exchanger, is reduced in pressure by the outdoor motor-operated expansion valve, is evaporated by the outdoor heat exchanger and is returned to the compressor.

Further, for refrigerant charged in the refrigerant circulation system (12), for example, flon gas R22 or flon gas R134a (1,1,1,2-tetrafluoroethane) is used. For lubricating oil for refrigerating apparatus charged in the compressor (not shown) of the outdoor unit (20), mineral oil is used in the case of use of flon gas R22, or ester oil as synthetic oil is used in the case of use of flon gas R134a.

The communication line (11) is formed by connecting a plurality of pipes (40, 40, ...). Out of the pipes (40), for example, a gas-side communication line (11) has a length of 4m and a liquid-side communication line (11) has a length of 30m.

Further, the communication line (11) is connected to the outdoor-side refrigerant circuit (21) and the indoor-side refrigerant circuit (31) through respective couplings (13) such as flared fitting and flange fitting. The adjacent pipes (40, 40, ...) are connected to each other by brazing.

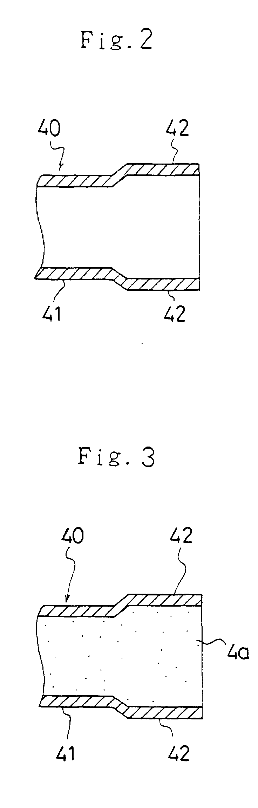

In one of features of the present invention, as shown in Figs. 2-4, block plugs (50) are provided at both open ends of the pipe (40) respectively. The pipe (40) is a clean copper pipe in which water and oil are removed from the inner surface thereof, and has a structure that connecting portions (42, 42) are formed at both ends of a main portion (41) respectively.

The main portion (41) is formed so as to have the uniform diameter from one end to another end. The connecting portions (42, 42) are each flared so as to be formed larger in diameter than the main portion (41).

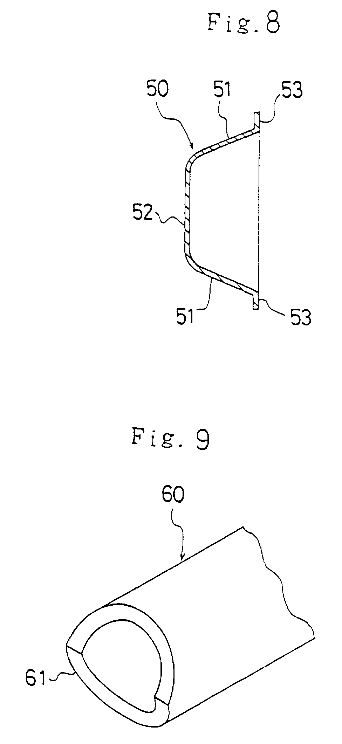

As shown in Fig. 8, the block plug (50), which is the most important feature of the present invention, is mounted on each of the connecting portions (42, 42) in a way to be press-fitted into each of the connecting portions (42, 42) of the pipe (40) from their opening ends.

The block plug (50) is a metallic film and more specifically is made of brazing filler metal. The block plug (50) is shaped into a hat in cross section in a way that its trunk portion (51) like a truncated cone is formed at one end (inner end) thereof continuously with a top portion (52) and is formed at the other end (outer end) continuously with a flange portion (53) directed outward.

Further, the trunk portion (51) of the block plug (50) adheres closely to the inner periphery of the end of the connecting portion (42) and concurrently the flange portion (53) adheres closely to the end surface of the connecting portion (42), thereby sealing the pipe (40). Nitrogen gas (4a) as inert gas is poured into the pipe (40) before mounting of the block plug (50) so that the pipe (40) is filled with the nitrogen gas (4a).

The adjacent'pipes (40, 40, ...) are connected at each of the connecting portions (42, 42) to each other through a connecting piece (60).

As shown in Figs. 5-7, the connecting piece (60) is inserted at one end thereof into the connecting portion (42) of one pipe (40) and is inserted at the other end into the connecting portion (42) of another pipe (40), through connecting tools (70). The outer periphery of the connecting piece (60) is brazed with the inner peripheries of the connecting portions (42, 42) thereby connecting two pipes (40, 40).

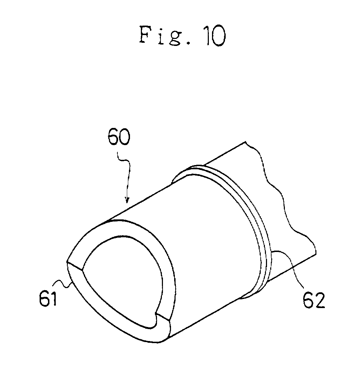

As shown in Fig. 9, the connecting piece (60) is formed into a short pipe whose outer diameter is slightly smaller that the inner diameter of the connecting portion (42) of the pipe (40), and each of ends (61, 61) thereof is shaped into a wedge point (V-shaped) in side view so as to be bias cut from both opposite sides. When inserted into the connecting portions (42, 42) of the pipes (40, 40), the connecting piece (60) is concurrently inserted into both the pipes (40, 40) through the connecting tools (70) in the state that it is inserted into the trunk portions (51) of the block plugs (50) mounted to the connecting portions (42). In the insertion of the connecting piece (60), the block plugs (50) are broken.

Further, when the pipes (40) are heated by a burner in order to connect the connecting piece (60) and the pipes (40), the block plugs (50) are melt into brazing filler metal so that the connecting piece (60) can be brazed with the pipes (40) through the block plugs (50).

### - Pipe connecting method -

Next, description is made about a pipe connecting method of the above-mentioned air conditioner (10).

First, the outdoor unit (20) and the indoor units (30) are installed at given places in a building or the like and the communication line (11) is then connected to the outdoor-side refrigerant circuit (21) and the indoor-side refrigerant circuit (31) through the couplings (13).

At the time, the communication line (11) is formed in a way of connecting a multiplicity of pipes (40) to one another.

Here, detailed description is made about connecting operation of the pipes (40).

First, the pipe (40) is subjected to a blockading step. For example, an original pipe with a uniform diameter from which water and oil are removed is formed, and as shown in Fig. 2, both ends of the original pipe are then flared thereby forming connecting portions (42, 42) contiguous with a main portion (41).

Thereafter, as shown in Fig. 3, the pipe (40) is filled with nitrogen gas (4a).

Subsequently, in the state that the pipe (40) is filled with nitrogen gas (4a), as shown in Fig. 4, the trunk portions (51) of the block plugs (50) formed in another step are press-fitted into the connecting portions (42, 42) from their opening ends respectively so that the block plugs (50) are mounted on the pipe (40) so as to seal the pipe (40) by the block plugs (50), thereby completing the blockading step.

The pipes (40) which are each provided with block plugs (50) and are each filled with nitrogen gas (4a) are stored in a plant or the like and are then carried to the site of installation of the air conditioner (10) by a specific pipe count.

Thereafter, at the site of installation, a piece inserting step is started. As shown in Fig. 5, when two pipes (40, 40) are connected to each other, one end of the connecting piece (60) is inserted into the trunk portion (51) of the block plug (50) mounted at the connecting portion (42) of one pipe (40), and the other end of the connecting piece (60) is inserted into the trunk portion (51) of the block plug (50) mounted at the connecting portion (42) of the other pipe (40).

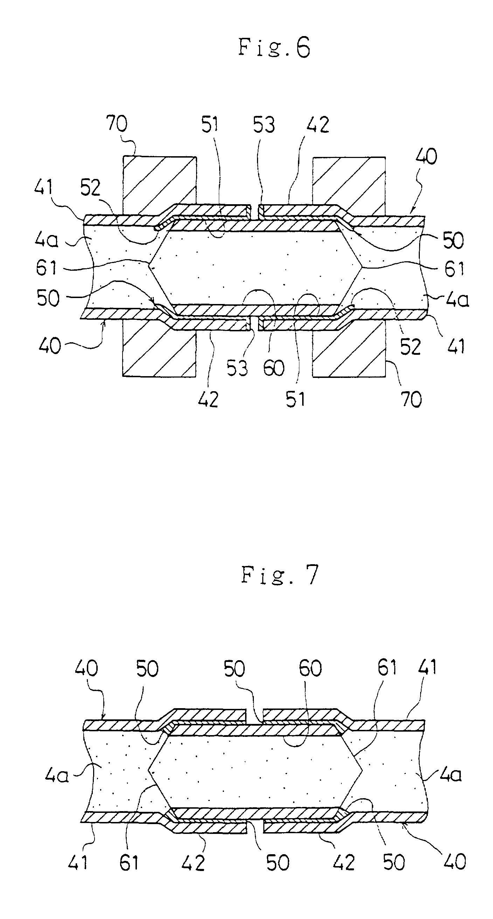

Subsequently, the adjacent ends of the two pipes (40, 40) are each held by the connecting tool (70) and the two pipes (40, 40) are moved toward each other. In detail, as shown in Fig. 6, the connecting piece (60) is concurrently pushed into the connecting portions (42, 42) of both the pipes (40, 40). At the time, the push-in of the connecting piece (60) provides breakage of the block plugs (50) by the connecting piece (60) since the connecting piece (60) has both ends (61) each shaped into a wedge point.

In this state, the block plugs (50) made of brazing filler metal are interposed between the connecting piece (60) and the connecting portions (42, 42) of the pipes (40).

Next, the pipe connecting method proceeds from the piece inserting step to a joint step. When the pipes (40) are heated by a burner in the state that the connecting piece (60) is pushed in the connecting portions (42, 42) of both the pipes (40, 40), as shown in Fig. 7, the block plugs (50) are melt so that the pipes (40) are brazed with the connecting piece (60). At the time, since the pipes (40) are filled with nitrogen gas (4a), the inner space of each pipe (40) is brazed under nitrogen gas atmosphere thereby completing the joint step.

Such connection between the pipes (40) is sequentially made thereby resulting in formation of the communication line (11). As mentioned above, the communication line (11) is then connected to the outdoor unit and the indoor units. Thereafter, the inner space of the communication line (11) is sucked into a vacuum and refrigerant is charged in the communication line (11), thereby completing construction in relation to the air conditioner (10).

### - Effects of pipe connection in Embodiment 1 -

As mentioned so far, according to the present embodiment, since the block plugs (50) are respectively provided on both ends of the pipe (40) so that the inside of the pipe (40) is blockaded, sufficient management of pipes (40) is possible. Accordingly, it can be prevented in advance that: a high humidity of air enters the pipe (40); and the pipe (40) is used with dewfall left on the inner surface thereof.

As a result, since it can be securely prevented that water is mixed into refrigerant, the dry rule can be strictly observed thereby enhancing reliability of air conditioning.

In particular, the above-mentioned effect is conspicuously exerted in the case of use of a refrigerant mixture containing flon gas R134a, HFC or the like as refrigerant. In detail, if flon gas R134a is used as refrigerant, it is required to use ester oil as lubricating oil for refrigerating apparatus. Ester oil has a high affinity for water so as to be chemically combined with water at a very high speed. The mixture of ester oil and water would produce carboxylic acid. If carboxylic acid exists in the refrigerant circulation system (12), it has an effect of melting an insulation (enamel) of a compressor provided in the outdoor unit (20). Therefore, the dry rule must be strictly observed. The above embodiment can securely follow the dry rule.

Further, since no water is produced in the pipe (40), production of an oxide film in brazing can be prevented. As a result, the clean rule can be strictly observed thereby enhancing reliability of refrigerating operation.

In detail, when the pipes (40) which are copper pipes are connected to each other by brazing, an oxide film is formed on each pipe due to chemical combination between copper and oxygen. If such an oxide film is formed on the inner surface of the pipe (40), the oxide film is mixed into refrigerant and lubricating oil for refrigerating apparatus. The oxide film degrades the lubricity of the lubricating oil for refrigerating apparatus, clogs a capillary tube and an oil backing hole of an accumulator and acceleratedly wears compressor parts and the like, resulting in decrease in life time of the compressor. Therefore, the clean rule must be strictly observed. The present embodiment can securely follow the clean rule.

Furthermore, since the block plug (50) is made of brazing filler metal, it is not necessary to separately provide brazing filler metal for brazing. This enables saving in material thereby achieving energy conservation.

In addition, since the block plug (50) is used as brazing filler metal, it can be prevented that alien substances remain after connection of the pipes (40). This enhances reliability of air conditioning.

Since the block plug (50) is shaped into a hat in cross section, blockade of the pipe (40) can be securely made.

Further, since the block plug (50) is press-fitted into the pipe (40), mounting of the block plug (50) can be readily made. This facilitates a mounting work.

Furthermore, since the pipe (40) is filled with nitrogen gas (4a), production of an oxide film in brazing can be securely prevented. This enables secure obedience of the clean rule.

Since the connecting portion (42) of the pipe (40) is formed in a large diameter, the pipes (40, 40) can be connected to each other without decrease in pipe diameter due to the connecting piece (60).

Further, since the pipe (40) is a copper pipe, working such as bending can be readily made. This allows easy construction of piping.

Furthermore, since the ends (61, 61) of the connecting piece (60) is shaped into a point, breakage of the block plug (50) can be readily made at the ends (61, 61), this accelerates and facilitates the pipe connecting work.

### - Embodiment 2 -

As shown in Fig. 10, this embodiment has a structure that the connecting piece (60) is provided with a ring-shaped brazing filler metal (62).

The ring-shaped brazing filler metal (62) is fitted on the outer periphery of the middle portion of the connecting piece (60) and is designed so as to adhere closely to the end surface of the connecting portion (42) of the pipe (40) when the connecting piece (60) is inserted into the connecting portion (42).

When the pipe (40) is heated by a burner in order to connect the pipe (40) and the connecting piece (60), the block plug (50) is melt and concurrently the ring-shaped brazing filler metal (62) is also melt thereby additionally applying brazing filler metal to the pipe (40).

The reason for provision of the ring-shaped brazing filler metal (62) is as follows: It is essential only that the block plug (50) has a strength capable of blockading each opening end of the pipe (40), or such a thickness. Further, brazing filler metal has a better penetrativity as the distance between the pipe (40) and the connecting piece (60) is narrower. Accordingly, the thinner the block plug (50) is, the better it is. If the block plug (50) is formed thinner, it may be short of brazing filler metal. Therefore, the ring-shaped brazing filler metal is provided as additional brazing filler metal.

According to the present embodiment, shortage of brazing filler metal can be securely prevented so that the connecting piece (60) can be securely jointed with the pipe (40). This provides enhanced reliability of the connecting work.

Other structures, operations and effects are the same as in Embodiment 1.

### - Embodiment 3 -

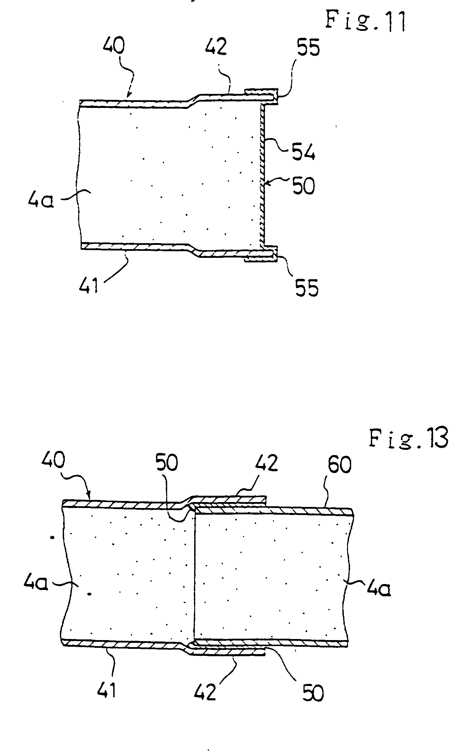

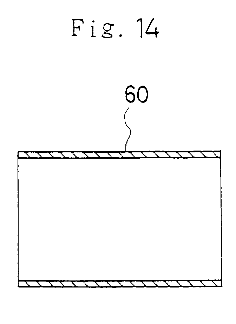

As shown in Figs. 11 and 13, this embodiment shows another embodiment of the block plug (50). In detail, the block plug (50) of this embodiment is shaped into a disk by including a plane portion (54) and a flange portion (55) instead of the block plug (50) including the trunk portion (51) of Embodiment 1.

The plane portion (54) is formed in the shape corresponding to the cross-sectional surface of the connecting portion (42) of the pipe (40).

The flange Portion (55) is formed in the shape of U in cross section. The flange portion (55) is also designed so as to be press-fitted into the connecting portion (42) of the pipe (40) from the outer peripheral edge thereof.

The block plug (50) is designed so as to be broken by the connecting piece (60).

As shown in Fig. 14, the connecting piece (60) is composed of a short pipe which has a uniform diameter from one end to another end.

Accordingly, in the case of connection of the pipes (40), each block plug (50) is broken by the connecting piece (60) as it is inserted into the connecting portion (42) of each pipe (40) as shown in Fig. 13. Then, the pipe (40) is heated by a burner so as to be jointed with the connecting piece (60).

Other structures, operations and effects are the same as in Embodiment 1.

### - Embodiment 4 -

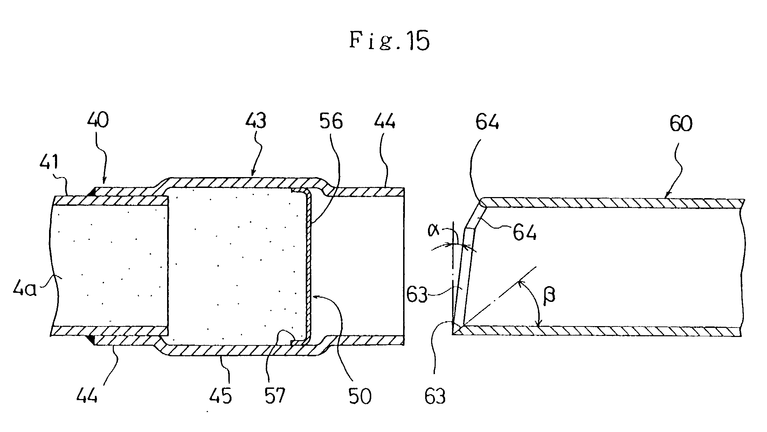

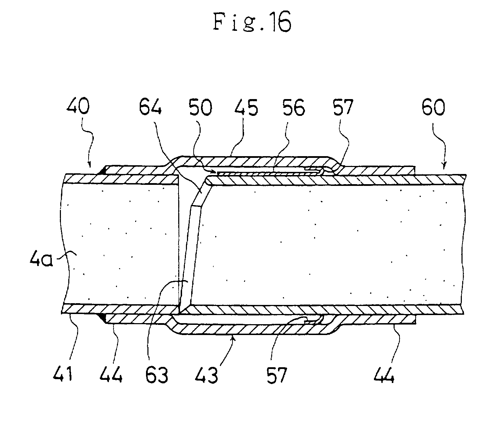

As shown in Figs. 15 and 16, this embodiment is so designed that the block plug (50) is made of copper which is same in material as the pipe (40).

More specifically, the pipe (40) is composed of a main portion (41) and an end piece (43).

In the end piece (43), both ends are formed into joint portions (44, 44) and an intermediate portion between the joint portions (44, 44) is formed into a bagged portion (45) larger in diameter than the joint portion (44). Thereby, the end piece (43) forms a connecting portion in the shape of a short pipe. Further, in the end piece (43), one joint portion (44) is fitted on the main portion (41) of the pipe (40) and is then brazed, while another joint portion (44) is opened.

The block plug (50) is so designed that a flange portion (57) is formed at the outer peripheral edge of a disk-shaped plane portion (56) corresponding to the cross-sectional surface of the bagged portion (45). The block plug (50) is press-fitted at the flange portion (57) into the bagged portion (45). Further, the block plug (50) is shaped into a thin film made of copper which is same in material as the pipe (40).

The connecting piece (60) is formed of a short pipe whose diameter is uniform from one end to another end. On its end surface, a blade part (63) and a scoop part (64) are formed.

The blade part (63) is for breaking the block plug (50) and is formed, over more than a half of the end surface of the connecting piece (60), into a single edge inwardly inclined at an angle of *β*. Further, the blade part (63) is inclined at an angle of α from circumferentially extreme end point projecting most outwardly (lower end of Fig. 15) toward both circumferential ends (upper end of Fig. 15) .

The scoop part (64) is for scooping the block plug (50) without cutting it away to leave it in the bagged portion (45) of the end piece (43). The scoop part (64) is formed continuously with the blade part (63) and is shaped into an arc in end surface.

### - Pipe connecting method of Embodiment 4 -

First, in a blockading step, the end piece (43) is jointed at one joint portion (44) thereof with the main portion (41) and the block plug (50) is mounted on the bagged portion (45) of the end piece (43), thereby forming the pipe (40).

When the pipe (40) is carried to the site of installation of the air conditioner (10), the pipe connecting method proceeds to the piece inserting step, in which the connecting piece (60) is inserted into end pieces (43) of two pipes (40, 40) to be jointed. When the connecting piece (60) is inserted into the end piece (43), the blade part (63) formed on the end surface of the connecting piece (60) breaks more than a half of the outer peripheral edge of the block plug (50) (approximately a lower half in Fig. 15).

Further, when the connecting piece (60) is pushed into the end piece (43), a portion of the outer peripheral edge of the block plug (50) (an upper portion in Fig. 15) is left, corresponding to the scoop part (64), without being cut away. As a result, as shown in Fig. 16, the block plug (50) remains left between the end piece (43) and the connecting piece (60).

Thereafter, the pipe connecting method proceeds to the joint step, in which the connecting piece (60) is brazed with the joint portions (44) of both the end pieces (43) so that the pipes (40) are connected to each other. The above operation is repeated to form the communication line (11).

### - Effects of pipe connecting in Embodiment 4 -

As mentioned so far, according to the present embodiment, since the block plug (50) made of copper is mounted on the end piece (43), the pipe (40) can be blockaded at the end surfaces though the block plug (50) is left inside the pipe (40) after connection of pipes (40). This securely prevents production of dewfall inside the pipe (40).

As a result, similar to Embodiment 1, the dry rule and the clean rule can be strictly observed in pipe connecting work.

### - Other embodiments -

In each of Embodiments 1-3, the connecting portions (42, 42) are each formed larger in diameter than the main portion (41) by flaring. In the present invention, however, the connecting portions (42, 42) may be equal in diameter to the main portion (41). Alternately, the connecting portion (42) may be enlarged in diameter in two stages for the purpose of increase in diameter of the communication line (11) at its intermediate part or may be formed less in diameter than the main portion (41) for the purpose of decrease in diameter of the communication line (11) at its intermediate part.

Further, in each of Embodiments 1-3, the block plug (50) is shaped into a hat or a disk in cross section. However, the block plug (50) may have various forms such as a slightly outwardly projecting form, a cap and a simple disk. In other words, it is essential only that the block plug (50) has the shape capable of blockading the pipe (40) and interposing between the connecting piece (60) and the pipe (40), for brazing, through insertion of the connecting piece (60).

In each of Embodiments 1-4, the block plug (50) is press-fitted into the pipe (40). However, the block plug (50) may be ultrasonically bonded at the outer peripheral edge there of on the pipe (40). The ultrasonic bonding makes it possible to shape the block plug (50) into a simple disk and to securely mount the block plug (50) on the pipe (40), thereby enhancing sealing performance of the pipe (40).

Further, the connecting piece (60) may have an end surface with a wedge point, may be like a simple pipe or may have an end surface bias cut into a round edge. In other words, it is essential only that the connecting piece (60) is capable of breaking the block plug (50) so as to interpose the broken block plug (50) between the connecting piece (60) and the pipe (40).

Furthermore, it is a matter of course that the pipe (40) may have different-shaped block plugs (50) at both the ends so as to be connected at both the ends to different diameter pipes (40).

The pipe (40) is not limited to a copper pipe and may be instead made of various kinds of material such as a iron pipe.

The pipe (40) is not limited to the communication line (11) for communication between the outdoor unit (20) and the indoor unit (30) and may be instead a refrigerant delivery pipe located inside the outdoor unit (20).

Further, the pipe (40) is not limited to a pipe for air conditioner (10) and may be applicable to various kinds of pipes.

The block plug (50) may be made of various kinds of metallic films instead of copper.

In each invention of claims 1-13, it is not necessary to fill the pipe (40) with nitrogen gas (4a). Instead of nitrogen gas (4a), inert gas such as argon gas may be used.

### [Industrial Field of Utilization]

As mentioned so far, the pipe connecting method and the piping structure of the present invention are useful for connection of refrigerant delivery pipes for air conditioner and refrigerating apparatus and in particular are suitable for piping work made so as not to leave water in a pipe.

## Claims

1. A method of connecting two pipes comprising the following steps:
(i) mounting block plugs (50) each made of brazing filler metal in the form of a thin film at respective open ends of connecting portions (42,42) of a first pipe (40) which connecting portions (42,42) are formed continuously with a main portion (41) of the pipe (40) and are located at both end sides of the main portion (41), where the outer peripheries of the block plugs (50) are adhered closely to the open ends of the connecting portions (42, 42) respectively, so as to seal the pipe (40);
(ii) inserting one end of a connecting piece (60) into the connecting portion (42) of the first pipe (40), rupturing the block plug (50), inserting the other end of the connecting piece (60) into a connecting portion (42) of a second pipe (40) also provided with a block plug (50) and rupturing that block plug;
(iii) characterised by heating the connecting portions (42) of the first and second pipes (40) and the connecting piece (60) through application of heat to an outer portion of the first and second pipes (40) to allow the block plugs (50) to melt and jointing the connecting portions (42) of the first and second pipes (40) to the connecting piece (60) by means of the melted block plugs (50).

2. A pipe connecting method according to claim 1, wherein the melted block plugs (50) serve as the jointing material.

3. A pipe connecting method according to claim 1 or 2, wherein the block plugs (50) are hat-shaped in cross section.

4. A pipe connecting method according to any preceding claim, wherein in step (i) the block plugs (50) are press-fitted into the connecting portions (42).

5. A pipe connecting method according to claim 1, 2 or 3 wherein in step (i) the block plugs (50) are ultrasonically bonded into the open ends of the connecting portions (42).

6. A pipe connecting method according to any preceding claim, wherein the pipe (40) is filled with inert gas (4a).

7. A pipe connecting method according to any preceding claim, wherein both of the connecting portions (42,42) of each pipe (40) are formed larger in diameter than the main portion (41).

8. A pipe connecting method according to any preceding claim, wherein the pipes (40) are copper pipes.

9. A pipe connecting method according to any preding claim, wherein each end (61,61) of the connecting piece (60) is shaped into a wedge point.

10. A pipe connecting method according to any preceding claim, wherein a ring of brazing filler metal (62) is provided on the connecting piece (60).

11. A pipe connecting method according to any preceding claim, wherein the pipe (40) is a refrigerant pipe for refrigerating apparatus (10).

12. A piping structure comprising pipes (40) connected to one another, each of which comprises a main portion (41) and connecting portions (42, 42) which are formed continuously with the main portion (41) and are located at opposite ends of the main portion (41), wherein
one end of a connecting piece (60) has been inserted into the connecting portion (42) of the first pipe (40) and block plugs (50),made of brazing filler metal in the form of a thin film and having an outer periphery adhered closely to an open end of each of the connecting portions (42), mounted therein ruptured, and the other end of the connecting piece (60) has been inserted into the connecting portion (42) of the second pipe (40) and the block plugs (50) mounted therein ruptured, characterised in that the connecting portions (42) of the pipes (40) have been jointed to the connecting piece (60) by the block plug.

13. A piping structure according to claim 12, wherein the jointing material has been formed by melting the block plugs (50).

14. A piping structure according to claim 12 or 13, wherein each end (61, 61) of the connecting piece (60) is shaped into a wedge point.

15. A piping structure according to any of claims 12 to 14, wherein the pipe (40) is filled with inert gas (4a).

16. A piping structure according to any of claims 12 to 15, wherein the pipe (40) is a refrigerant pipe for refrigerating apparatus (10).

## Patentansprüche

1. Verfahren zum Verbinden zweier Rohre, enthaltend die folgenden Verfahrensschritte:
a) Anbringen von aus einem metallischen Lötfüllmittel bestehenden und jeweils in Form einer dünnen Schicht ausgebildeten Sperrpfropfen (50) an jeweiligen offenen Enden von Verbindungsbereichen (42, 42) eines ersten Rohrs (40), wobei die Verbindungsbereiche (42, 42) einstückig mit einem Hauptbereich (41) des Rohrs (40) ausgebildet und an beiden Endseiten des Hauptbereichs (41) angeordnet sind und wobei die Außenränder der Sperrpfropfen (50) zur Abdichtung des Rohrs (40) jeweils dicht an das offene Ende des jeweiligen Verbindungsbereichs (42, 42) anhaften;
b) Einschieben eines Endes eines Verbindungsstücks (60) in den Verbindungsbereich (42) des ersten Rohrs (40), Durchbrechen des Sperrpfropfens (50), Einschieben des anderen Endes des Verbindungsstücks (60) in einen Verbindungsbereich (42) eines zweiten Rohrs (40), das ebenfalls mit einem Sperrpfropfen (50) versehen ist, und Durchbrechen dieses Sperrpfropfens;
c) wobei das Verfahren dadurch gekennzeichnet ist, daß die Verbindungsbereiche (42) des ersten und zweiten Rohrs (40) und das Verbindungsstück (60) durch Wärmezufuhr zu einem äußeren Bereich des ersten und zweiten Rohrs (40) erwärmt werden, was ein Schmelzen der Sperrpfropfen (50) und ein dichtes Verbinden der Verbindungsbereiche (42) des ersten und zweiten Rohrs (40) mit dem Verbindungsstück (60) durch die geschmolzenen Sperrpfropfen (50) ermöglicht.

2. Verfahren zum Verbinden von Rohren nach Anspruch 1, wobei die geschmolzenen Sperrpfropfen (50) als Verbindungsmaterial dienen.

3. Verfahren zum Verbinden von Rohren nach Anspruch 1 oder 2, wobei die Sperrpfropfen (50) einen hutförmigen Querschnitt aufweisen.

4. Verfahren zum Verbinden von Rohren nach einem der vorhergehenden Ansprüche, wobei im Verfahrensschritt a) die Sperrpfropfen (50) in einem Paßsitz in die Verbindungsbereiche eingepreßt werden.

5. Verfahren zum Verbinden von Rohren nach Anspruch 1, 2 oder 3, wobei im Verfahrensschritt a) die Sperrpfropfen (50) in einem Ultraschallverfahren in die offenen Enden der Verbindungsbereiche (42) eingebondet werden.

6. Verfahren zum Verbinden von Rohren nach einem der vorhergehenden Ansprüche, wobei das Rohr (40) mit Inertgas (4a) gefüllt wird.

7. Verfahren zum Verbinden von Rohren nach einem der vorhergehenden Ansprüche, wobei beide Verbindungsbereiche (42, 42) jedes Rohrs (40) einen größeren Durchmesser aufweisen als der Hauptbereich (41).

8. Verfahren zum Verbinden von Rohren nach einem der vorhergehenden Ansprüche, wobei es sich bei den Rohren (40) um Kupferrohre handelt.

9. Verfahren zum Verbinden von Rohren nach einem der vorhergehenden Ansprüche, wobei jedes Ende (61, 61) des Verbindungsstücks (60) zu einer keilförmigen Spitze geformt ist.

10. Verfahren zum Verbinden von Rohren nach einem der vorhergehenden Ansprüche, wobei auf dem Verbindungsstück (60) ein Ring aus metallischem Lötfüllmittel (62) vorgesehen ist.

11. Verfahren zum Verbinden von Rohren nach einem der vorhergehenden Ansprüche, wobei es sich bei dem Rohr (40) um ein Kühlmittelrohr für ein Kühlgerät (10) handelt.

12. Rohrstruktur, enthaltend miteinander verbundene Rohre (40), die jeweils einen Hauptbereich (41) und einstückig mit dem Hauptbereich (41) ausgebildete und an entgegengesetzten Enden des Hauptbereichs (41) angeordnete Verbindungsbereiche (42, 42) umfassen, wobei
ein Ende eines Verbindungsstücks (60) in den Verindungsbereich (42) des ersten Rohrs (40) eingeschoben wurde und darin angeordnete, aus metallischem Lötfüllmittel bestehende und in Form einer dünnen Schicht ausgebildete Sperrpfropfen (50) durchbrochen wurden, deren Außenrand dicht an ein offenes Ende jeweils eines der Verbindungsbereiche (42) anhaftet, und wobei das andere Ende des Verbindungsstücks (60) in den Verbindungsbereich (42) des zweiten Rohres (40) eingeschoben wurde und die darin angeordneten Sperrpfropfen (50) durchbrochen wurden und wobei die Rohrstruktur dadurch gekennzeichnet ist, daß die Verbindungsbereiche (42) der Rohre (40) jeweils durch den Sperrpfropfen dicht mit dem Verbindungsstück (60) verbunden wurden.

13. Rohrstruktur nach Anspruch 12, wobei das Verbindungsmaterial durch Schmelzen der Sperrpfropfen (50) gebildet wurde.

14. Rohrstruktur nach Anspruch 12 oder 13, wobei jedes Ende (61, 61) des Verbindungsstücks (60) zu einer keilförmigen Spitze geformt ist.

15. Rohrstruktur nach einem der Ansprüche 12 bis 14, wobei das Rohr (40) mit Inertgas (4a) gefüllt ist.

16. Rohrstruktur nach einem der Ansprüche 12 bis 15, wobei es sich bei dem Rohr (40) um ein Kühlmittelrohr für ein Kühlgerät (10) handelt.

## Revendications

1. Procédé de connexion de deux conduits comprenant les étapes suivantes:
(i) le montage de bouchons d'obturation (50) constitués chacun d'un métal d'apport de brasage sous la forme d'un film mince aux extrémités ouvertes respectives des parties (42,42) de connexion d'un premier conduit (40) lesquelles parties de connexion (42,42) sont formées de façon continue avec une partie principale (41) du conduit (40) et sont situées aux deux extrémités latérales de la partie principale (41), où les périphéries extérieures des bouchons d'obturation (50) sont appliquées étroitement sur les extrémités ouvertes des parties de connexion (42,42) respectivement, de manière à fermer de façon étanche le conduit (40) ;
(ii) l'introduction d'une extrémité d'une pièce de connexion (60) dans la partie de connexion (42) du premier conduit (40), la rupture du bouchon d'obturation (50), l'introduction de l'autre extrémité de la pièce de connexion (60) dans une partie de connexion (42) d'un second conduit (40) également pourvu d'un bouchon d'obturation (50) et la rupture de ce bouchon d'obturation ;
(iii) caractérisé par le chauffage des parties de connexion (42) du premier et du second conduits (40) et de la pièce de connexion (60) par application de chaleur sur une partie extérieure du premier et du second conduits (40) de façon à permettre aux bouchons d'obturation (50) de fondre et de réaliser la jonction des parties de connexion (42) du premier et second conduits (40) à la pièce de connexion (60) au moyen des bouchons d'obturation (50) qui ont fondu.

2. Procédé de connexion de conduit selon la revendication 1, dans lequel les bouchons d'obturation (50) qui ont fondu servent de matériau de jonction.

3. Procédé de connexion de conduit selon la revendication 1 ou 2, dans lequel les bouchons d'obturation (50) ont en coupe transversale une forme de chapeau.

4. Procédé de connexion de conduit selon l'une quelconque des revendications précédentes, dans lequel dans l'étape (i) les bouchons d'obturation (50) sont ajustés en pression à l'intérieur des parties de connexion (42).

5. Procédé de connexion de conduit selon la revendication 1, 2 ou 3 dans lequel dans l'étape (i) les bouchons d'obturation (50) sont liés par ultrasons à l'intérieur des extrémités ouvertes des parties de connexion (42).

6. Procédé de connexion de conduit selon l'une quelconque des revendications précédentes, dans lequel le conduit (40) est rempli au moyen d'un gaz inerte (4a).

7. Procédé de connexion de conduit selon l'une quelconque des revendications précédentes, dans lequel à la fois les parties de connexion (42,42) de chaque conduit (40) sont formées avec un diamètre plus large que la partie principale (41).

8. Procédé de connexion de conduit selon l'une quelconque des revendications précédentes, dans lequel les conduits (40) sont des conduits en cuivre.

9. Procédé de connexion de conduit selon l'une quelconque des revendications précédentes, dans lequel chaque extrémité (61,61) de la pièce de connexion (60) est conformée en un coin.

10. Procédé de connexion de conduit selon l'une quelconque des revendications précédentes, dans lequel une bague d'un métal d'apport de brasage (62) est prévue sur la pièce de connexion (60).

11. Procédé de connexion de conduit selon l'une quelconque des revendications précédentes, dans lequel le conduit (40) est un conduit réfrigérant pour un appareil (10) de réfrigération.

12. Structure de canalisation comprenant des conduits (40) reliés les uns aux autres, chacun d'eux comprenant une partie principale (41) et des parties de connexion (42,42) qui sont formées de façon continue avec la partie principale (41) et sont situées aux extrémités opposées de la partie principale (41), dans laquelle :
une extrémité d'une pièce de liaison (60) a été introduite à l'intérieur de la partie de connexion (42) du premier conduit (40) et des bouchons d'obturation (50) constitués d'un métal d'apport de brasage sous la forme d'un film mince et dont une périphérie extérieure est appliquée de façon étroite sur une extrémité ouverte de chacune des parties de connexion (42), y sont montés et rompus, et l'autre extrémité de la pièce de connexion (60) a été introduite dans la partie de connexion (42) du second conduit (40) et les bouchons d'obturation (50) qui y sont montés ont été rompus, caractérisée en ce que les parties de connexion (42) des conduits (40) ont été réunies à la pièce de connexion (60) par le bouchon d'obturation.

13. Structure de canalisation selon la revendication 12, dans laquelle le matériau de jonction a été formé par fusion des bouchons d'obturation (50).

14. Structure de canalisation selon la revendication 12 ou 13, dans laquelle chaque extrémité (61,61) de la pièce de connexion (60) est conformée en un coin.

15. Structure de canalisation selon l'une quelconque des revendications 12 à 14, dans laquelle le conduit (40) est rempli au moyen d'un gaz inerte (4a).

16. Structure de canalisation selon l'une quelconque des revendications 12 à 15, dans laquelle le conduit (40) est un conduit réfrigérant pour un appareil (10) de réfrigération.
